# EUROPEAN PATENT SPECIFICATION

(11) **EP 2 027 026 B1**
(45) Date of publication and mention of the grant of the patent: **18.09.2013**
(21) Application number: 07730780.9
(22) Date of filing: 23.05.2007
(51) Int. Cl.: B65D 5/48, B65D 5/50

(54) **PACKAGE WITH A FOLDABLE CHAMBER**
VERPACKUNG MIT EINEM FALTBAREN KAMMER
EMBALLAGE AVEC UNE CHAMBRE PLIABLE

(30) Priority: 26.05.2006 FI 20060224 U
(43) Date of publication of application: 25.02.2009
(73) Proprietor: Metsä Board Oyj, 02100 Espoo (FI)
(72) Inventor: SYRJÄNEN, Seppo, 33900 Tampere (FI); HUTTUNEN, Petri, 33100 Tampere (FI)
(74) Representative: Kuosmanen, Timo
(86) International application number: PCT/FI2007/050293
(87) International publication number: WO 2007/138160

(56) References cited:
- JP-A- 9 226 744
- JP-A- 09 226 744
- JP-A- 2002 321 727
- JP-A- 2002 321 727
- US-A- 5 193 741
- US-B1- 6 568 586
- US-B1- 6 568 586

## Description

The invention relates to a package, which is made of a fibrous material and comprises: at least one lid, which is openable and closable; a bottom; and at least three side walls; and wherein the package is assembled from one single sheet-like package preform; the package comprises at least one chamber; the chamber comprises a cover panel, at least one bottom panel and at least three side panels arranged to define a predefined free space in the chamber; and the cover panel comprises at least one product opening for arranging a product in the free space.

Electronic products and similar products and components susceptible to impacts may be packed in packages made of corrugated board. An advantage of corrugated board is its structural rigidity. A disadvantage is, however, that a package made of corrugated board does not look like it has a good quality. Instead, packing board may be provided with printings of good quality, wherefore it is often used as a packing material, also in packages intended for products susceptible to impacts. Since packing board does not have a similar structural rigidity to corrugated board, a separate protective casing, in which the product is placed, must be used inside a packing board package. The protective casing may be made of cellular plastic, pressed from fibre pulp, or it may be an item separately made of packing board. A disadvantage is that it is complicated and expensive to manufacture a package with a separate protective casing. The document JP 2 002 321 727 upon which the preamble of claim 1 is based, discloses a package box for a wrapped object. The package box is assembled from a sheet-like package preform and comprises a septum piece, a frame piece and a flap piece.

### BRIEF DESCRIPTION OF THE INVENTION

It is an object of the present invention to provide a new and improved package according to claim 1.

The package of the invention is characterized in that the at least one chamber is connected by at least one bend to the upper part of a side wall inside the package, whereby the chamber structure as a whole may be turned upwards at the bend such that the surfaces of the cover panel and the at least one bottom panel move closer to one another when the at least one chamber is turned upwards and away from one another when the at least one chamber is turned downwards at the bend, thus allowing easy access to the package.

The idea of the invention is that the upper part of the package comprises one or more additional chambers with a space for accommodating one or more products. The chamber is an integral part of the rest of the package structure, because the package consists of one single sheet-like package preform. Furthermore, the chamber only covers a part of the upper part of the package.

The invention provides the advantage that the chamber allows the placement of even a small-sized product close at hand in the upper part of the package, where it is immediately visible as the lid is opened. In addition, due to the side panels the product stays in its place in the chamber. The chamber also protects the product from impacts applied to the outer surfaces of the package, wherefore products susceptible to impacts may also be arranged in the chamber. The package also has space for other products and additional material, which may be arranged in the package in such a manner that they protect the product in the chamber from impacts from below and the side.

Due to the chamber structure, the package may be packed easily and it is therefore also suitable for machine packing. The chamber may be assembled conveniently into final form after larger products or material have been arranged on the bottom of the package. Simple linear movements may be used in the packing.

Furthermore, since the package consists of one single package preform made of a fibrous material, it is simpler and faster to manufacture the package compared to a package consisting of many different components. It is also easy to recycle the package, because it is made of a fibrous material. The package structure also allows the implementation of versatile printings on the outer surfaces of the package as well as on the inner surface of the lid and the cover panel of the chamber, for instance.

The idea of an embodiment is that the chamber is at a predefined distance from the bottom of the package, whereby one or more products may be arranged under the chamber.

The idea of an embodiment is that the chamber comprises at least one side panel connected by a bend to the cover panel, in the region of the edge of the product opening. The side panel may be bent downwards and its lower edge may be fixed to the bottom panel. In this case, the side panel supports the chamber structure, since it forms a substantially vertical section between the cover panel and the bottom panel. The structure of the chamber is thus firm. In addition, the side panel makes the edges of the product opening stiffer and supports the cover panel. The side panels may further be arranged to prevent the product from moving in the chamber.

The idea of an embodiment is that in the lower edge of the bendable side panel there is a locking flap, which is arranged in a locking opening in the bottom panel. Thus, there is shape locking between the side panel and the bottom panel. The side panels according to this application may be pushed with a machine by means of a suitable pusher ram downwards from the horizontal position, whereby their locking flaps are automatically locked in the locking openings of the bottom panel. Thus, the lower parts of the side panels need not be glued or separately fastened in a narrow space between the bottom panel and the cover panel in some other way. The advantage is that the chamber is formed fast and in a simple manner.

The idea of an embodiment is that the side panels of the chamber are arranged at a predefined distance from the side walls of the package. The product placed in the chamber is thus protected by a protective buffer between the side panel and the side wall. The protective buffers prevent the effects of impacts applied to the side walls of the package on the product packed in the chamber.

The idea of an embodiment is that the chamber comprises at least one foot directed from the lower part of the chamber towards the bottom of the package. Due to the foot, the lowest bottom panel of the chamber is at a predefined distance from the bottom of the package, whereby, for instance, additional material associated with the product to be placed in the chamber may be arranged on the bottom of the package. While additional material is packed, the chamber may be turned upwards at the bends, whereby e.g. a manual, a CD ROM or a similar object the size of which covers substantially the entire bottom area may be arranged on the bottom of the package with a simple linear movement. Another advantage is that the foot supports the package in the height direction.

The idea of an embodiment is that the chamber comprises at least one additional bottom panel under the actual bottom panel at a predefined distance from the bottom panel. The chamber thus comprises at least three substantially horizontal plane surfaces at a distance from one another. The bottom panel of the chamber may comprise at least one additional product opening, and between the bottom panel and the additional bottom panel there may further be two or more transverse, additional side panels. In this case, the bottom panel, the additional bottom panel and the additional side panels are arranged to define an additional free space, in which at least one product may be arranged through the additional product opening. The product to be arranged in the additional space may be an accessory of the actual product to be arranged in the chamber, such as a battery or a memory card. Such a small-sized accessory is well-protected in the additional space under the actual product arranged in the chamber.

The idea of an embodiment is that the lid is stiffened by at least one longitudinal stiffening portion, which has at least three material layers glued on top of one another. The lid may then comprise an outer panel, to which the first inner panel and the second inner panel of the lid are connected at the opposite edges of the lid by means of bends. The inner panels may be dimensioned in such a manner that along a predefined section they lie one upon the other, thus forming a stiffening portion on the overlapping section, which stiffens the structure of the lid. Consequently, in the section of the stiffening portion there are at least the outer panel and two inner panels glued one upon the other. In this way, the structure of the lid may be stiffened by using a small amount of fibrous material. In addition, such a stiffening portion structure is applicable in a package formed of one preform. Furthermore it may be used in a machine assembled package.

### BRIEF DESCRIPTION OF THE FIGURES

Some embodiments of the invention are described in greater detail in the attached drawings, in which
Figure 1 schematically shows a package of the invention, provided with a chamber,
Figure 2 schematically shows the package according to Figure 1 from side A,
Figure 3 schematically shows a second package of the invention from the side,
Figure 4 schematically shows a part of a package similar to Figure 3 from direction B,
Figure 5 schematically shows a top view of the package of Figure 1 without a lid from direction C,
Figure 6 schematically shows a detail of the lid of the package according to Figure 1, seen from point D,
Figure 7 schematically shows a package of the invention, provided with two chambers,
Figures 8 to 10 schematically show outspread preforms of packages of the invention, which are used for assembling the packages, and
Figure 11 schematically shows the preform of Figure 8 after the structures of the lid and the chamber have been preassembled.

In the figures, some embodiments of the invention are simplified for the sake of clarity. Like parts are denoted by like reference numerals in the figures.

### DETAILED DESCRIPTION OF SOME EMBODIMENTS OF THE INVENTION

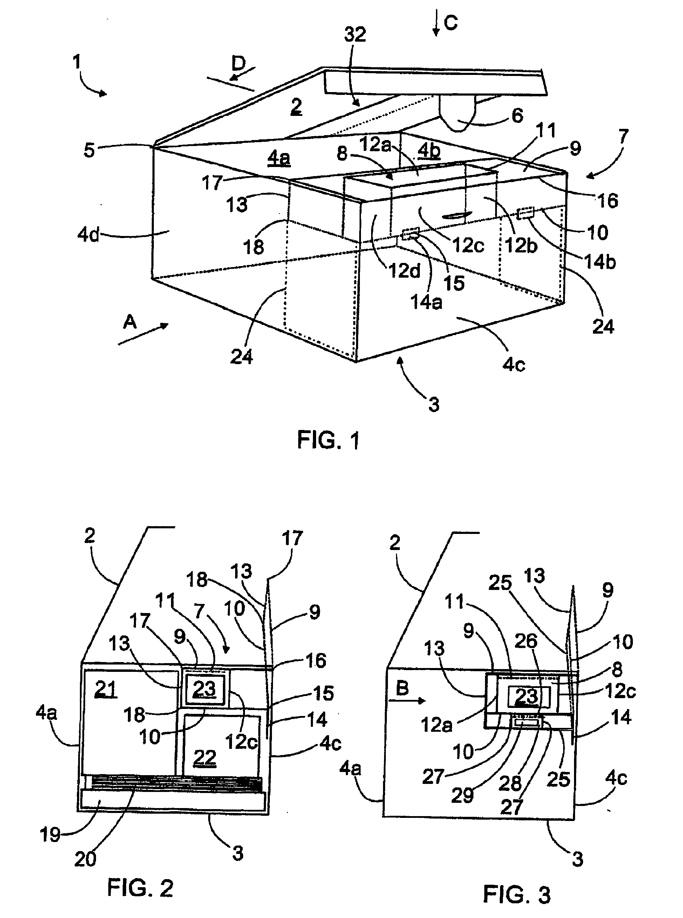

Figure 1 shows a package 1, which comprises a lid 2, a bottom 3 and a plurality of side walls 4a to 4d. The lid 2 may be connected by a bend 5 to the upper edge of the side wall 4a, which makes the lid 2 openable and closable. The lid 2 may comprise necessary locking means 6 for locking it, or alternatively the lid 2 may be glued to the side wall 4c. Figure 1 shows the package 1, the bottom 3 of which is rectangular, in which case there are four side walls 4. In some cases, the bottom may have a triangular, hexagonal or some other shape, whereby the number of side walls 4 and the shape of the lid are arranged according to the shape of the bottom 3. Instead of one lid 2, the package 1 may also comprise two or more lid parts, which together form the lid of the package. In the upper part the package 1 further comprises one or more chambers 7, which comprise one or more free spaces 8, in which one or more products may be arranged. The free space 8 is defined by the chamber's 7 cover panel 9, bottom panel 10, product opening 11 in the cover panel 9 and side panels 12a to 12d, which may be arranged into the vicinity of the edges of the product opening 11. At least some of the side panels 12b to 12d may be bendable flaps which are connected to the cover panel 9 by bends and may be locked in the bottom panel 10 by shape locking, or they may be glued. Between the cover panel 9 and the bottom panel 10 there may be a connecting panel 13, the inner surface of which may act as a side panel 12a in the application according to Figure 1. The side panels 12a to 12d may support the cover panel 9 and the bottom panel 10 on one another, which makes the structure of the chamber 7 firm and makes it easier to place the product in the chamber 7 and to take the product out of the chamber 7. The bottom panel 10 may be fastened by one or more gluing flaps 14a, 14b to the side wall 4c. Between the gluing flaps 14 and the bottom panel 10 there may be bends 15, which enable the turning of the bottom panel 10 with respect to the side wall 4c. The cover panel 9, for its part, may be connected by a bend 16 to the upper part of the side wall 4c, which means that the cover panel 9 may also be turned with respect to the side wall 4c. Between the cover panel 9 and the connecting panel 13 there may further be a bend 17, and between the connecting panel 13 and the bottom panel 10 there may be a bend 18. In this case, the chamber 7 may be assembled from the position shown in Figure 2 with a broken line to the position shown by the continuous line, after e.g. a manual 19, a CD ROM 20 or other relatively large products, supplementary articles 21 or accessories 22 have been arranged on the bottom 3 of the package 1. The chamber 7 may be assembled by turning the cover panel 9 and the bottom panel 10 downwards with respect to the bends 16, 15. After this, the side panels 4b to 4d may be pressed downwards and fixed at their lower part to the bottom panel 10. The chamber 7 is thus provided with a free space 8, in which a desired product 23, which may be e.g. a mobile phone, a camera, some other electronic device, a medicine dosing apparatus or some other device susceptible to impacts, may be placed.

Figure 1 shows that the chamber 7 may comprise one or more feet 24, which may extend downwards from the chamber 7 and be supported on the bottom 3 of the package 1 or the product 22 under the chamber 7. The feet 24 may be arranged at the opposite ends of the chamber 7 as shown in Figure 1, in which case they lean against the side walls 4b, 4d of the package 1 and do not thus complicate the placing of the products 19 to 22 inside the package 1. In its simplest, the foot 24 may be a flap turned downwards from the chamber 7. For the sake of clarity, Figures 2 and 3 do not show the feet 24.

The package 1 shown in Figure 3 differs from that of Figures 1 and 2 in that the chamber 7 comprises one or more additional bottom panels 25 under the actual bottom panel 10. The additional bottom panel 25 is at a predefined distance from the bottom panel 10. In this case, the chamber 7 comprises three or more horizontal plane surfaces 9, 10, 25. The bottom panel 10 may further comprise an additional product opening 26, at the edges of which there may be bendable flaps 27, which may constitute vertical walls and support the additional bottom panel 25 on the bottom panel 10. The bottom panel 10, the additional bottom panel 25 and the bendable flaps 27 define an additional free space 28, in which a product 29 may be arranged, the size of which is smaller than that of the product 23 arranged in the free space 8 between the cover panel 8 and the bottom panel 10. The product 29 may be, for instance, a battery of an electronic device 23, a memory card, or a similar product which is easily damaged or lost, or a product which, due to its unaesthetic appearance, is preferably arranged in the additional space 28 under the actual product 23. As shown in Figure 3, all planes 9, 10, 25 of the chamber 7 are arranged by means of bends in such a manner that the chamber 7 may be turned with respect to the side wall 4c.

In the solutions of Figures 2 and 3, the plane surfaces 9, 10, 25 move away from one another when the chamber 7 is turned from the position shown by a broken line in the figures to the horizontal position shown by a continuous line and, accordingly, the plane surfaces move closer to one another if the chamber 7 is turned from the horizontal position to the upper position. Naturally, it is clear that there cannot exist a product in the chamber 7 during the turning and that the bendable panels 12, 27 and the like must be turned parallel to the bottom panel 10, 25.

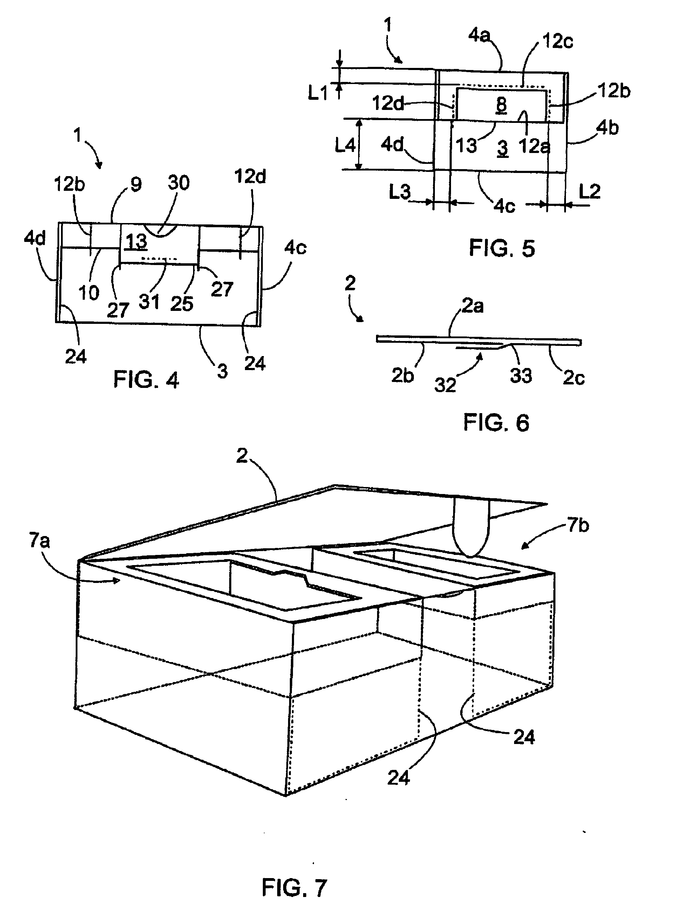

Figure 4 shows the chamber 7 provided with the additional bottom panel 25 from direction B. The additional bottom panel 25 may have a substantially smaller size than the actual bottom panel 10. The connecting panel 13 may further comprise a slot 30, due to which it is easier to handle the product 23 arranged in the space 8. The additional bottom panel 25 may have an opening 31 at the additional space 28 so that the product 29 may be pushed out of the chamber 7 with a finger.

Figure 5 shows the package from above. For the sake of clarity, the figure does not show a lid. The side panels 12a to 12d of the chamber 7 are at a predefined distance L1 to L4 from the side walls 4a to 4d of the package 1, whereby there are protective buffers around the space 8, protecting the product 23 to be arranged in the space 8 from impacts from the side. In the solutions of Figures 1, 2 and 5, the inner surface of the connecting panel 13 acts as a side panel 12a, and the protective buffer is formed between the outer surface of the connecting panel 13 and the side wall 13c. However, in the application of Figure 3 the space 8 is arranged in the chamber 7 in such a manner that the protective buffer is formed between the connecting panel 13 and the bendable side panel 12a.

Figure 6 shows a detail of the structure of the lid 2. The lid 2 may comprise an outer panel 2a, to the opposite edges of which two inner panels 2b and 2c are connected by bends. The inner panel 2c may be dimensioned to extend and overlap with the inner panel 2b, whereby a longitudinal stiffening portion 32 is formed at the lid 2, stiffening the structure of the lid 2 and protecting the product 23 placed in the chamber 7 from impacts from the side of the lid 2. At the stiffening portion 32, the material thickness is threefold. The inner panel 2c may have a bend 33, which facilitates the arrangement of the panels 2b, 2c so that they overlap each other.

Figure 7 shows an application, in which the package 1 comprises a first chamber 7a and a second chamber 7b. In some cases, there may be more chambers 7. The basic structure of the chamber 7a, 7b may be similar to one of the above applications. The size and shape of the chambers 7a and 7b may differ from one another, as shown in Figure 7. The chambers 7a, 7b may be dimensioned in such a manner that their connecting panels are substantially against one another, whereby the upper part of the package substantially only consists of the chambers, or alternatively there may be a gap between the chambers like in Figure 7, in which case it is possible, if required, to pack a product having the height of the entire package in this gap. The structure of the chambers 7a, 7b allows large products to be arranged on the bottom of the package when the chambers are turned to their upper position, as in Figures 2 and 3.

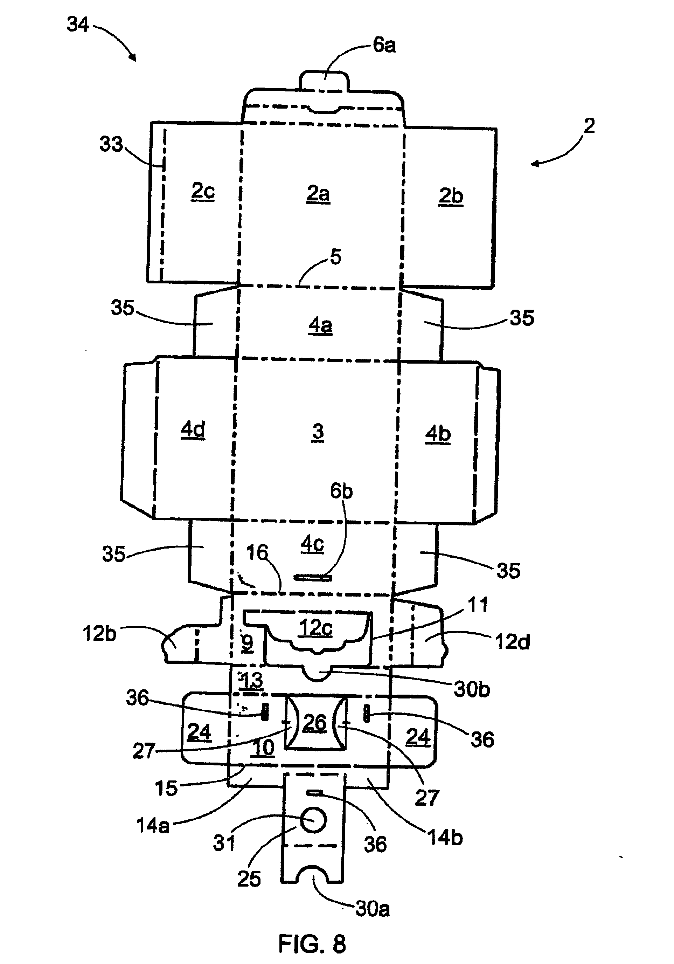

Figure 8 shows a package preform 34, from which the package may be machine-assembled by folding and gluing. Besides the above features, the preform of the figure also includes gluing flaps 35, by which the side walls 4a to 4d may be glued to one another at the corners of the package. A very firm package is thus formed also in cases where the package is made of relatively thin folding boxboard. The package preform 34 of Figure 8 also includes locking slots 36, in which the locking flaps of the bendable side panels 12b, 12c and 12d may be shape-locked.

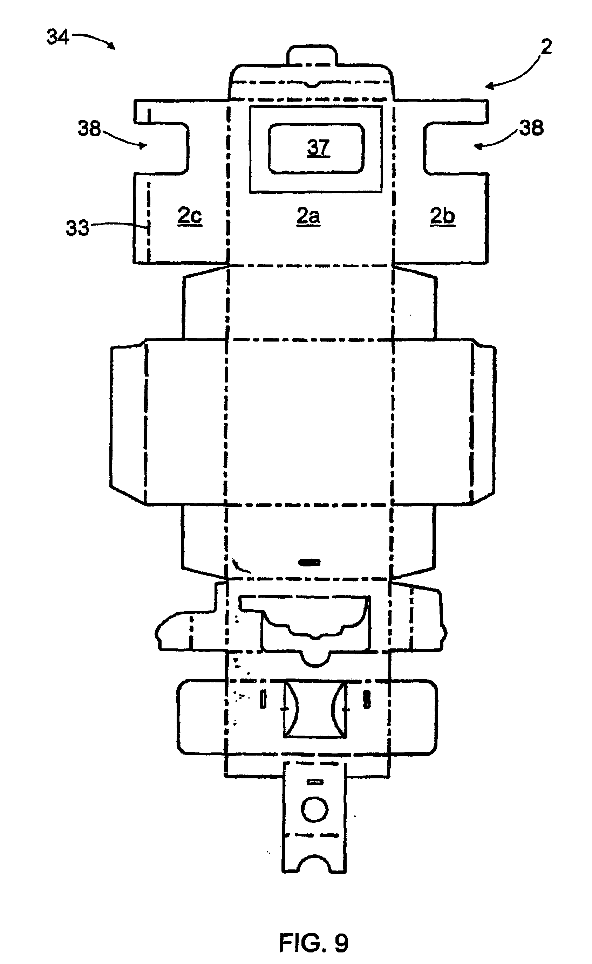

Except for the lid 2, the package preform 34 shown in Figure 9 is similar to the package preform shown in Figure 8. In this case, the lid 2 is provided with a window 37, wherefore the inner panels 2b, 2c have slots 38.

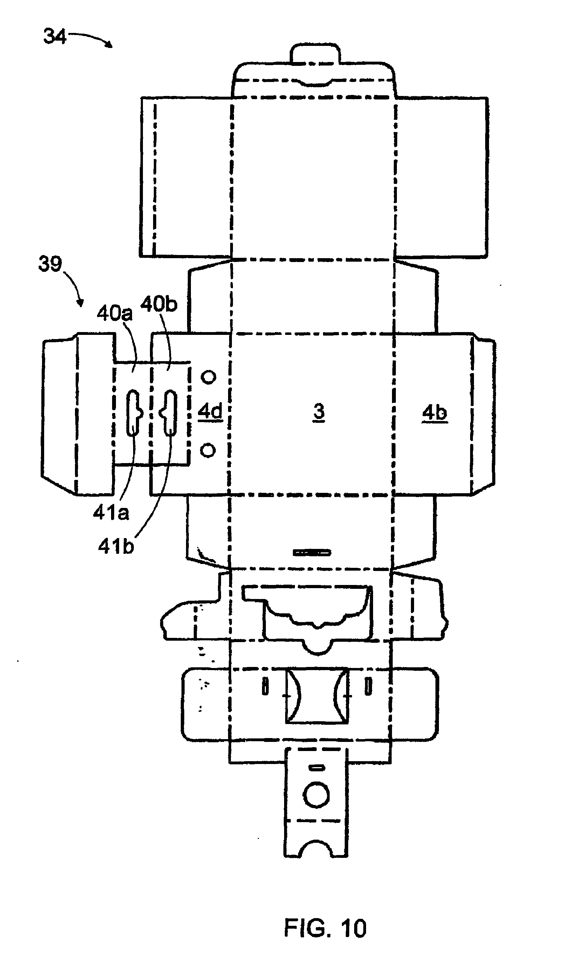

The package preform 34 shown in Figure 10, for its part, comprises a suspension flap 39 in one side wall 4. The suspension flap 39 may comprise suspension parts 40a, 40b to be arranged against one another and provided with suspension openings 41 a, 41 b.

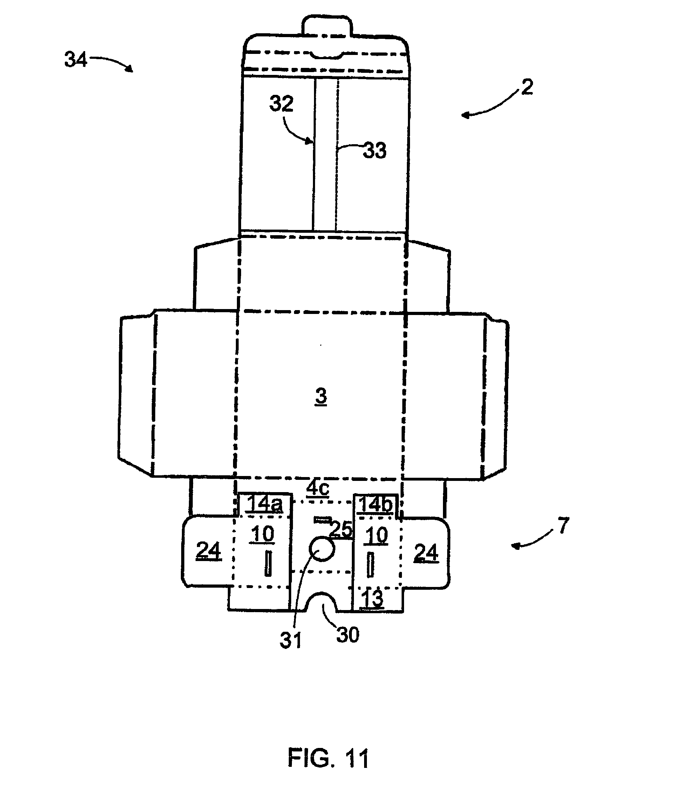

Figure 11 shows the package preform 34 according to Figure 8 after the lid 2 and the chamber 7 have been pre-glued before the final assembly of the package 1 in the packing machine.

It is to be mentioned that the package preform 34 may be different from what is shown in Figures 8, 9 or 10.

The drawings and the related description are only intended to illustrate the idea of the invention. In its details, the invention may vary within the scope of the claims.

## Claims

1. A package, which is made of a fibrous material and comprises:
at least one lid (2), which is openable and closable;
a bottom (3); and
at least three side walls (4); and wherein
the package (1) is assembled from one single sheet-like package preform (34);
the package (1) comprises at least one chamber (7, 7a, 7b);
the chamber (7) comprises a cover panel (9), at least one bottom panel (10) and at least three side panels (12a to 12d) arranged to define a predefined free space (8) in the chamber (7); and
the cover panel (9) comprises at least one product opening (11) for arranging a product in the free space (8)
**characterized in**
**that** the at least one chamber (7, 7a, 7b) is connected by at least one bend (15, 16) to the upper part of a side wall (4) inside the package, whereby the chamber structure as a whole may be turned upwards at the bend (15, 16) such that the surfaces of the cover panel (9) and the at least one bottom panel (10) move closer to one another when the at least one chamber (7, 7a, 7b) is turned upwards and away from one another when the at least one chamber is turned downwards at the bend, thus allowing easy access to the package.

2. A package as claimed in claim 1, **characterized in**
**that** the chamber (7) comprises at least one side panel (12) connected by a bend to the cover panel, in the region of the edge of the product opening (11); and
**that** the side panel (12) is bent downwards and its lower edge is fixed to the bottom panel (10).

3. A package as claimed in claim 2, **characterized in**
**that** in the lower edge of the bendable side panel (12) there is a locking flap;
**that** the bottom panel (10) comprises a locking opening (36) at the locking flap; and
**that** the locking flap of the bendable side panel (12) is arranged in the locking opening in the bottom panel (10), whereby there is shape locking between the side panel and the bottom panel.

4. A package as claimed in any one of the preceding claims, **characterized in**
**that** the side panels (12a to 12d) of the chamber are arranged at a predefined distance (L1 to L4) from the side walls (4a to 4d) of the package, whereby the product placed in the chamber (7) is protected by a protective buffer between the side panel (12a to 12d) and the side wall (4a to 4d).

5. A package as claimed in any one of the preceding claims, **characterized in**
**that** the chamber (7) comprises at least one foot (24) directed from the lower part of the chamber (7) towards the bottom (3) of the package, whereby the outermost bottom panel (10, 25) of the chamber is at a predefined distance from the bottom (3) of the package.

6. A package as claimed in any one of the preceding claims, **characterized in**
**that** the chamber (7) comprises at least one additional bottom panel (25) under the actual bottom panel (10), whereby the chamber (7) comprises at least three substantially horizontal plane surfaces (9, 10, 25) at a distance from one another.

7. A package as claimed in claim 6, **characterized in**
**that** between the bottom panel (10) and the additional bottom panel (25) of the chamber there are at least two transverse, additional side panels (27);
**that** the bottom panel (10) comprises at least one additional product opening (26); and
**that** the bottom panel (10), the additional bottom panel (25) and the additional side panels (27) are arranged to define an additional free space (28), in which at least one product (29) may be arranged through the additional product opening (26).

8. A package as claimed in any one of the preceding claims, **characterized in**
**that** the lid (2) is stiffened by at least one longitudinal stiffening portion (32), which is arranged to extend along the lid (2) and has at least three material layers glued on top of one another.

## Patentansprüche

1. Verpackung, die aus faserigem Material hergestellt ist und umfasst:
mindestens einen Deckel (2), der zu öffnen und verschließbar ist;
einen Boden (3); und
mindestens drei Seitenwände (4); und wobei
die Verpackung aufgebaut ist aus einer einzelnen bogenartigen Paketvorform (34);
und wobei die Verpackung (1) mindestens eine Kammer (7, 7a, 7b) umfasst;
wobei die Kammer (7) ein Abdeckpanel (9), mindestens ein Bodenpanel (10) und mindestens drei derart angeordnete Seitenpanels (10) umfasst, dass diese einen vordefinierten freien Raum (8) in der Kammer (7) ergeben;
und wobei das Abdeckpanel (9) mindestens eine Produktöffnung (11) umfasst, um das Produkt im freien Raum (8) anzuordnen;
**dadurch gekennzeichnet,**
**dass** die mindestens eine Kammer (7, 7a, 7b) durch mindestens einen Falz (15, 16) mit dem oberen Teil der Seitenwand (4) im Inneren der Verpackung verbunden ist, wobei die Kammerstruktur als Ganzes an dem Falz nach oben geklappt werden kann, sodass die Oberfläche des Abdeckpanels (9) und das mindestens eine Bodenpanel (10) näher zusammenrücken, wenn die mindestens eine Kammer (7, 7a, 7b) nach oben gedreht wird, und sich voneinander wegbewegen, wenn die mindestens eine Kammer am Falz nach unten weggeklappt wird, um so einfacheren Zugang zur Verpackung zu gewähren.

2. Verpackung wie in Anspruch 1 beansprucht, **dadurch gekennzeichnet, dass** die Kammer (7) mindestens ein Seitenpanel umfasst, das durch einen Falz in der Nähe des Rands der Produktöffnung (11) mit dem Abdeckpanel verbunden ist; und dass das Seitenpanel (12) nach unten gefaltet ist und dessen unterer Rand am Bodenpanel (10) fixiert ist.

3. Verpackung wie in Anspruch 2 beansprucht, **dadurch gekennzeichnet, dass** im unteren Rand des klappbaren Seitenpanels (12) eine Schließlasche vorgesehen ist;
dass das Bodenpanel (10) eine Schließöffnung (30) an der Schließlasche aufweist; und
dass die Schließlasche des klappbaren Seitenpanels (12) in der Schließöffnung (36) des Bodenpanels (10) angeordnet ist, wobei ein Formschluss zwischen dem Seitenpanel und dem Bodenpanel entsteht.

4. Verpackung wie in einem der vorhergehenden Ansprüche beansprucht,
**dadurch gekennzeichnet, dass** die Seitenpanels (12a bis 12d) der Kammer in einem festgelegten Abstand (L1 bis L4) von den Seitenwänden (4a bis 4d) der Verpackung angeordnet sind, wobei das in der Kammer angeordnete Produkt durch einen schützenden Dämpfer zwischen dem Seitenpanel (12) und den Seitenwänden (4) geschützt ist.

5. Verpackung wie in einem der vorhergehenden Ansprüche beansprucht,
**dadurch gekennzeichnet, dass** die Kammer (7) mindestens einen Sockel (24) umfasst, der sich vom unteren Teil der Kammer (7) bis zum Boden (3) der Verpackung erstreckt, wobei sich das äußerste Bodenpanel (10, 25) der Kammer in einem festgelegten Abstand vom Boden (3) der Verpackung befindet.

6. Verpackung wie in einem der vorhergehenden Ansprüche beansprucht,
**dadurch gekennzeichnet, dass** die Kammer (7) mindestens ein zusätzliches Bodenpanel (25) unter dem eigentlichen Bodenpanel (10) umfasst, wobei die Kammer (7) mindestens drei horizontale plane Flächen (9, 10, 25) in Abstand voneinander umfasst.

7. Verpackung wie in Anspruch 6 beansprucht, **dadurch gekennzeichnet, dass** zwischen dem Bodenpanel (10) und dem zusätzlichen Bodenpanel (25) der Kammer (7) mindestens zwei querverlaufende zusätzliche Seitenpanels (27) vorgesehen sind;
dass das Bodenpanel (10) mindestens eine zusätzliche Produktöffnung (26) umfasst; und
dass das Bodenpanel (10), das zusätzliche Bodenpanel (25) und die zusätzlichen Seitpanels (27) derart angeordnet sind, dass diese einen zusätzlichen freien Raum (28) schaffen, in dem mindestens ein Produkt durch eine zusätzliche Produktöffnung (26) angeordnet werden kann.

8. Verpackung wie in einem der vorhergehenden Ansprüche beansprucht,
**dadurch gekennzeichnet, dass** der Deckel (2) durch mindestens einen längsverlaufenden versteifenden Teil (32) versteift ist, der so angeordnet ist, dass er sich über den Deckel (2) hinweg erstreckt und mindestens drei aufeinander verklebte Materialschichten umfasst.

## Revendications

1. Un emballage, qui est fait d'un matériau fibreux et qui comprend :
au moins un couvercle (2), qui est apte à être ouvert et fermé ;
un fond (3) ;
au moins trois parois latérales (4), et dans lequel
l'emballage (1) est assemblé à partir d'une seule préforme d'emballage en forme de feuille (34) ;
l'emballage (1) comprend au moins une chambre (7, 7a, 7b) ;
la chambre (7) comprend un panneau de couverture (9), au moins un panneau de fond (10) et au moins trois panneaux latéraux (12a à 12d) disposées de façon à définir dans la chambre (7) un espace libre (8) prédéterminé, et
le panneau de couverture (9) comprend au moins une ouverture de produit (11) pour disposer d'un produit dans l'espace libre (8),
**caractérisé en ce que**
ladite au moins une chambre (7, 7a, 7b) est reliée par au moins une pliure (15, 16) à la partie supérieure d'une paroi latérale (4) à l'intérieur de l'emballage, de sorte que la structure de chambre dans son ensemble peut être tournée vers le haut au niveau de la pliure (15, 16) de telle sorte que les surfaces du panneau de couverture (9) et dudit au moins un panneau de fond (10) se rapprochent l'un de l'autre lorsque ladite au moins une chambre (7, 7a, 7b) est tournée vers le haut et s'éloignent l'une de l'autre lorsque ladite au moins une chambre est tournée vers le bas au niveau de la pliure, ce qui permet un accès facile à l'emballage.

2. Un emballage tel que revendiqué dans la revendication 1, **caractérisé en ce que**
la chambre (7) comprend au moins un panneau latéral (12) relié par une pliure au panneau de couverture, dans la zone du bord de l'ouverture de produit (11), et
le panneau latéral (12) est plié vers le bas et son bord inférieur est fixé au panneau de fond (10).

3. Un emballage tel que revendiqué dans la revendication 2, **caractérisé**
**en ce que**, dans le bord inférieur de la paroi latérale (12) pliable, il y a un volet de verrouillage ;
**en ce que** le panneau de fond (10) comprend une ouverture de verrouillage (36) pour le volet de verrouillage, et
**en ce que** le volet de verrouillage de la paroi latérale pliable (12) est disposé dans l'ouverture de verrouillage aménagée dans le panneau de fond (10), grâce à quoi il est formé un verrouillage par engagement de formes entre le panneau latéral et le panneau inférieur.

4. Un emballage tel que revendiqué dans l'une quelconque des revendications précédentes, **caractérisé**
**en ce que** les panneaux latéraux (12a à 12d) de la chambre sont disposés à une distance prédéfinie (L1 à L4) des parois latérales (4a à 4d) de l'emballage, de sorte que le produit placé dans la chambre (7) est protégé par un tampon protecteur situé entre le panneau latéral (12a à 12d) et la paroi latérale (4a à 4d).

5. Un emballage tel que revendiqué dans l'une quelconque des revendications précédentes, **caractérisé**
**en ce que** la chambre (7) comprend au moins un pied (24) se dirigeant de la partie inférieure de la chambre (7) vers le fond (3) de l'emballage, de sorte que le panneau de fond (10, 25) le plus à l'extérieur de la chambre est situé à une distance prédéfinie du fond (3) de l'emballage.

6. Un emballage tel que revendiqué dans l'une quelconque des revendications précédentes, **caractérisé**
**en ce que** la chambre (7) comprend au moins un panneau de fond (25) supplémentaire situé sous le panneau de fond (10) proprement dit, grâce à quoi la chambre (7) comprend au moins trois surfaces planes sensiblement horizontales (9, 10, 25) à distance les unes des autres.

7. Un emballage tel que revendiqué dans la revendication 6, **caractérisé**
**en ce que**, entre le panneau de fond (10) et le panneau de fond supplémentaire (25) de la chambre il y a au moins deux panneaux latéraux transversaux (27) supplémentaires ;
**en ce que** le panneau de fond (10) comporte au moins une ouverture de produit (26) supplémentaire, et
**en ce que** le panneau de fond (10), le panneau de fond (25) supplémentaire et les panneaux latéraux (27) supplémentaires sont agencés de manière à définir un espace libre (28) supplémentaire, dans lequel au moins un produit (29) peut être agencé à travers l'ouverture de produit (26) supplémentaire.

8. Un emballage tel que revendiqué dans l'une quelconque des revendications précédentes, **caractérisé**
**en ce que** le couvercle (2) est raidi par au moins une portion (32) de rigidification longitudinale, qui est agencée pour s'étendre le long du couvercle (2) et présente au moins trois couches de matériau collées l'une sur l'autre.
